# EUROPEAN PATENT SPECIFICATION

(11) **EP 1 606 495 B1**
(45) Date of publication and mention of the grant of the patent: **17.02.2010**
(21) Application number: 03816349.9
(22) Date of filing: 21.03.2003
(51) Int. Cl.: F01D 17/16, F02B 37/24, F04D 29/46

(54) **SWINGING VANE CONCEPT FOR VNT TURBOCHARGERS**
SCHWINGSCHAUFELKONZEPT FÜR VNT-TURBOLADER
CONCEPT D'AILETTE OSCILLANTE POUR TURBOCOMPRESSEURS A BUSES A AILETTES

(43) Date of publication of application: 21.12.2005
(73) Proprietor: Honeywell International Inc., Morristown NJ 07960 (US)
(72) Inventor: SEVERIN, Emmanuel, F-88150 Thaon-les-Vosges (FR); CASTAN, Joel, F-88150 Thaon-les-Vosges (FR); ALVES, Jose, F-88150 Thaon-les-Vosges (FR)
(74) Representative: TBK-Patent
(86) International application number: PCT/IB2003/001039
(87) International publication number: WO 2004/083606

(56) References cited:
- DE-C- 19 838 928
- GB-A- 861 630
- US-A- 3 957 392
- US-A1- 2002 098 080
- US-B1- 6 314 736
- US-B1- 6 419 464
- PATENT ABSTRACTS OF JAPAN vol. 010, no. 014 (M-447), 21 January 1986 (1986-01-21) & JP 60 175707 A (NISSAN JIDOSHA KK), 9 September 1985 (1985-09-09)

## Description

The present invention relates to a nozzle and a turbine or compressor comprising the same. The invention further relates to a turbocharger comprising such a turbine and/or compressor.

Similar nozzles are known from documents US 6,314,736 B1, US 6,419,464 B1, JP 60-175 707 A and GB 861, 630 A.

In Document GB-861,630, there is disclosed a mounting of rotatable blades for the diffusor of a centrifugal compressor. In this construction the pivoting pins of the vanes are carried by an annular slidibly mounted wall which, by means of a press ring, is pressed against the opposite wall of the diffusor, thereby achieving a tight arrangement of the vanes in the nozzle formed between the two walls. The press ring is urged by a plurality of springs accommodated in respective holes of the turbine housing.

It is an object of the present invention to provide an improved nozzle preferably used in a turbine and/or a compressor of a turbocharger.

The object of the invention is achieved by the combination of the features set forth in claim 1. Preferable embodiments of the nozzle according to the invention are set forth in the subclaims.

According to the invention there are provided also a turbine and a compressor as well as a turbocharger comprising said turbine and/or compressor in which a nozzle according to the invention is used.

According to the technical solution defined in claim 1 a nozzle comprises a passage defined by an inner wall and an outer wall with at least one vane extending therein, wherein at least one of opposite portions of said vane is urged towards one of said walls. Thus a gap between said portion of the vain and the corresponding wall can be inhibited bringing the positive effect that turbine efficiency can be improved.

According to an embodiment of the invention the vane can comprise a first part and a second part each contacting one of said walls. With this configuration tolerances in sense of a reduced interval between the inner wall and the outer wall, e.g. due to deposits on one of the walls, can be absorbed by a relative displacement between the first part and the second part.

As said first part and said second part can also be resiliently biased relatively to each other above mentioned absorption of tolerances can be restored or an tolerance in sense of an increased interval between the inner wall and the outer wall can be absorbed.

Since said first part can hold said second part movably along the direction of the interval between said inner wall and said outer wall and with respect to said first part the first part can be fixed to the inner wall without a gap there between and the second part can absorb the tolerances of the outer wall.

Furthermore the vane of the nozzle may comprise a biasing member contacting said first part and said second part for biasing said opposite portions away from each other thus achieving above mentioned resiliency.

Additionally the vane of the nozzle can be rotatably about an axis extending substantially along the direction of the interval between said walls thus being able to adjust the cross-sectional area of the passage defined between the inner and outer wall. In this way a boost pressure of a turbine provided with the nozzle can be adjusted.

Since the vane can be rotatably adjustable by an actuating mechanism comprising a nozzle ring and a hinge mechanism in engagement with said vane via an unison ring the adjustment by rotating the vanes can advantageously be performed by a relative rotation of the unison ring and the nozzle ring thereby moving the hinge mechanism. Herein one of the rings can be adjustable by a cam. According to a preferred embodiment an unison ring is adjustable.

Preferably the second part of the vane can be a hollow element substantially enclosing an outer periphery of said first part slidably therein. Thus the second part can be guided on the first part thus having a good performance in view of the relative movement to each other. Furthermore by providing this structure the hollow element is able to protect the first element and the biasing member which in this case is preferably disposed inside the vane.

To provide a good protection effect and frictional characteristic to the outer wall said second part can be made of sheet metal.

Furthermore the biasing member can be formed integral with said second part thereby reducing the number of parts and manufacturing steps which contributes to the costs.

The biasing member can be formed by spring sheet metal extending along the longitudinal direction of said second part at the contact portion thereof thus having the possibility to provide the biasing member with an appropriate biasing force.

Alternatively said biasing member can also be formed separate from the second part and can be held by the same.

Furthermore said second part can be open at the side facing to said inner wall and at the side facing to said outer wall, thus facilitating the manufacturing of the second part being formed integral with the biasing member.

Alternatively said second part can be closed at the side of the portion contacting one of said walls by a bottom forming a plain surface for enhancing frictional properties to the outer wall and inhibiting abrasion or debris from entering the inside of the vane.

Additionally said biasing member can be attached to the side of said first part opposite to its portion contacting one of said walls.

The biasing member can also be attached to the first part by at least one welding thus securing the second part to the first part while ensuring the relative displacement between these parts. In the case the biasing member is not connected to the second part at least the biasing element itself would thus be secured to the first part.

According to an independent aspect of the present invention there is provided a vane to be used in a nozzle defined by two opposite walls which nozzle can preferably be used in a turbine or a compressor, wherein the vane is constituted of at least two parts being resiliently expendable and/or compressible between the walls of the nozzle.

In the following the invention is further illustrated by different embodiments with reference to the enclosed drawings. In the drawings:
Fig. 1 shows a cross-sectional view of the turbine side of a turbocharger;
Figs. 2a and 2b show the actuating mechanism of the variable nozzle device incorporated in the turbocharger shown in Fig. 1;
Figs. 3a, 3b, 3c show a cross-sectional front and a side view of a vane according to a first embodiment of the invention;
Figs. 4a and 4b show a front and cross-sectional side view of a vane according to a second embodiment of the invention;
Figs. 5a and 5b illustrate a cross-sectional side view and a cross-sectional front view of a vane according to a third embodiment of the invention; and

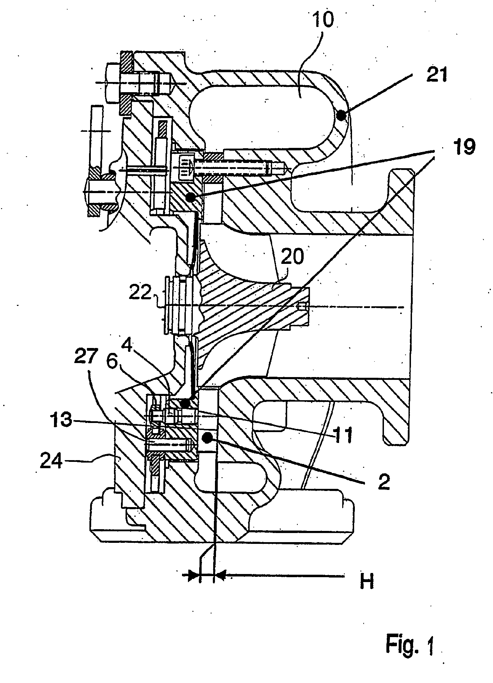

Fig. 1 shows a part of a turbine disposed in a turbocharger (not shown). Generally the turbocharger is equipped with a turbine housing 21 accommodating a turbine wheel 20 and a compressor housing (not shown) accommodating a compressor wheel (not shown). A center housing is disposed between these housings and accommodates a bearing for a shaft 22 connecting the turbine wheel 20 to the compressor wheel. Thus the rotation of the turbine wheel can be transmitted to the compressor wheel for compressing inlet air to an engine. The turbine wheel 20 is driven by exhaust gas coming from the engine and flowing through a volute 10 to a nozzle means. The nozzle means is a variable nozzle for adjusting the rotation of the turbine wheel 20 transmitted to the compressor wheel and thus for adjusting the pressure of the inlet air.

The variable nozzle means is disposed between an outer wall 13 of the turbine housing 21 and the center housing 24 as a part of the turbine and has a generally annular structure. A nozzle ring 19 of the variable nozzle device is provided with a plurality of vane pins 4 axially penetrating the nozzle ring 19, wherein on one end of the vane pins 4 vanes 2 are mounted such that the vanes 2 are disposed between an inner wall 11 of the nozzle ring and the outer wall 13. Thus a plurality of nozzle passageways which are adjustable due to a rotation of the vanes is defined. The vanes are rotatable about an axis 7 of the vane pins 4 which are connected to one end of vane arms 6 located on the opposite side of the nozzle ring 19. On this side opposite to the vanes 2 an unison ring 25 is disposed coaxially to the nozzle ring 19 which is relatively rotatable to the unison ring 25.

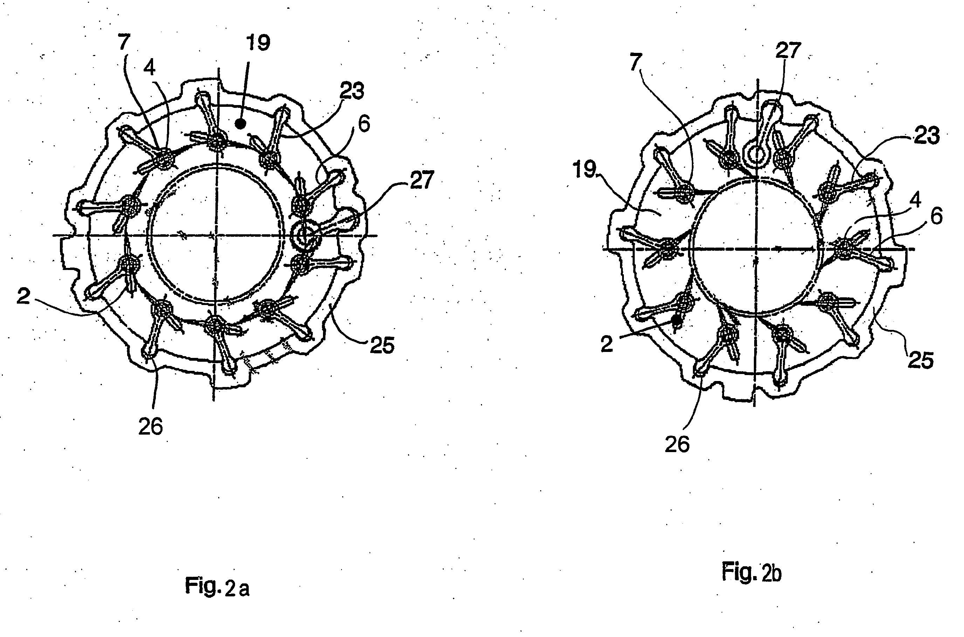

The unison ring 25 is provided with slots 26 at the inner circumferential surface thereof receiving the free ends of the vane arms 6. Thus when the vane ring 19 is rotated relatively to the unison ring 25 by a cam 27 which acts as an actuating member each vane arm 6 rotates about the axis 7 together with the respective vane pin 4 thus rotating also the respective vane 2 connected to the respective vane pin 4. In this way the rotational position of each vane 2 is adjusted by a rotation of the vane ring 19 relative to the unison ring 25. Consequently the vanes 2 can be positioned to be open as shown in Fig. 2a or can be positioned to be closed as shown in Fig. 2b so as to adjust the compressor performance.

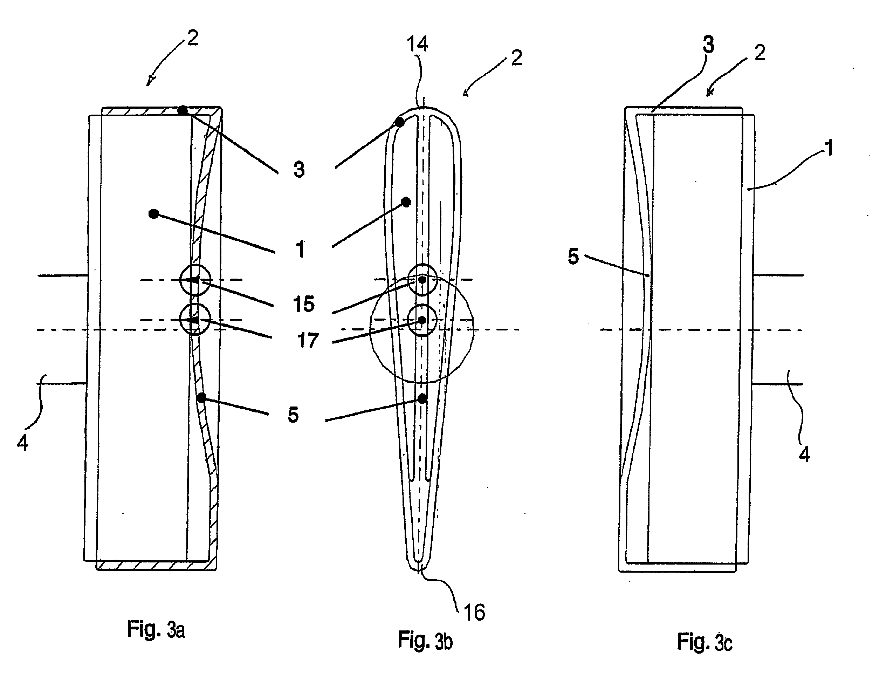

Following is a description of the vanes according to a first embodiment of the invention with respect to Figs. 3a to 3c.

Fig. 3a shows a side view of the vane 2, Fig. 3b shows a top view of the vane 2 and Fig. 3c shows another side view of the vane 2.

With respect to Fig. 3a the vane 2 is substantially constituted by a first part or a core portion 1 and a second part or a sleeve 3. The core 1 is connected to the vane pin 4 and one of its outer surfaces abuts on the inner wall 11 of the nozzle ring 19. The cross sectional shape of the core 2 is substantially as shown in Fig. 3b which correspond to a vane having an upstream end portion 14 and a downstream end portion 16.

The sleeve 3 having an inner outlining for fitting to the outer outlining of the core 1 is put over the core 1 so as to be slideable on the same. The sleeve 3 is open at both sides facing the inner wall 11 and the outer wall 13, respectively, and the respective side of it abuts against the outer wall 13.

At the side of the sleeve 3 abutting to the outer wall 13 a biasing member is disposed having the shape of a leaf spring extending between said end portions 14 and 16. Furthermore the leaf spring 5 projects to the inside of the sleeve 3 so as to be in contact with the outer surface of the core 1 facing the outer wall 13. In this embodiment the sleeve 3 is secured to the core 1 by welding at welding points 15 and 17.

Due to the structure of the vane 2 as described above the sleeve 3 is movable with respect to the core 1 in the direction of the axis 7 towards the core and this movement is restoreable by the leaf spring 5. Thus the vane 2 mounted to the nozzle ring 19 can be rotated together with the same while the outer face of the sleeve 3 abuts against the outer wall 13 of the turbine housing 21 without providing a gap therebetween. This is because tolerances between the inner wall 11 and the outer wall 13 or deposits can be absorbed by the resiliency effect of the vane 2 itself.

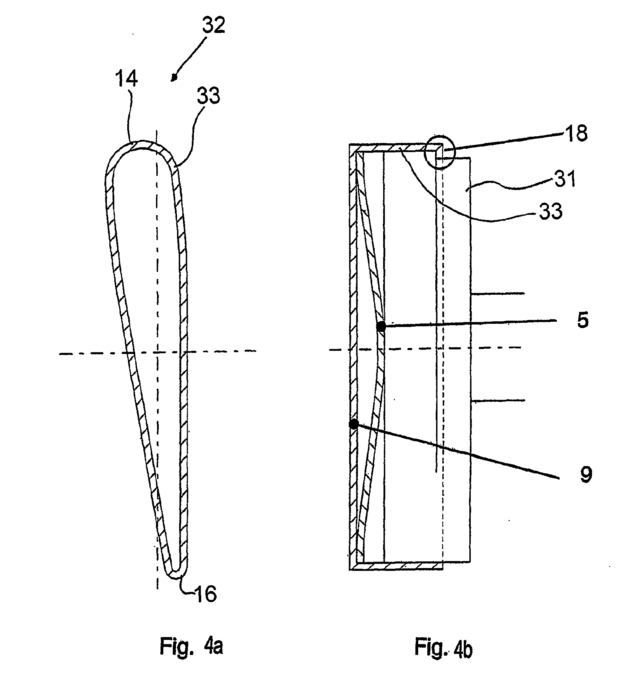

Fig. 4a and 4b show a second embodiment according to the invention. Herein a core 33 is substantially shaped as in the first embodiment but is additionally provided with a recess 18 formed at a side surface thereof which separates the core 31 into two portions each having different cross-sectional shapes. Herein the portion connected to the vane pin 4 is smaller in view to the cross-section and the recess 18 starts at the upstream end portions 14 of the vane 2 and ends before reaching the downstream tip end 16.

A sleeve 33 of this embodiment is, in contrary to the first embodiment, closed at the side facing the outer wall 13 by a plain bottom portion 9. By doing this the friction area between the sleeve 33 and the outer wall 13 is enlarged with respect to first embodiment which contributes to abrasion effects. Additionally deposits or debris are prevented from entering the inside of the vane 2.

As the part of the sleeve 33 which in the first embodiment was used for forming the leaf spring 5 is now used for forming the bottom portion 9 the leaf spring 5 is provided as a separate means which is inserted to the inside of the sleeve 33 before putting the same over the core 31. The leaf spring 5 is disposed between the sleeve 33 and the core 31 and provides the same resiliency effect as described for the first embodiment.

After putting the sleeve 33 over the core 31 an edge of the sleeve is folded to the recess 18 of the core 31. Thus a movement of the sleeve 33 away from the core 31 is prevented while a movement towards the core is prohibited. Since the recess 18 ends before reaching the downstream end portion 16 of the core 31 no disadvantageously problems when folding the sleeve 33 due to the acute angle of the downstream end portion 16 are obtained.

The remaining structure and effects are the same as described for the first embodiment.

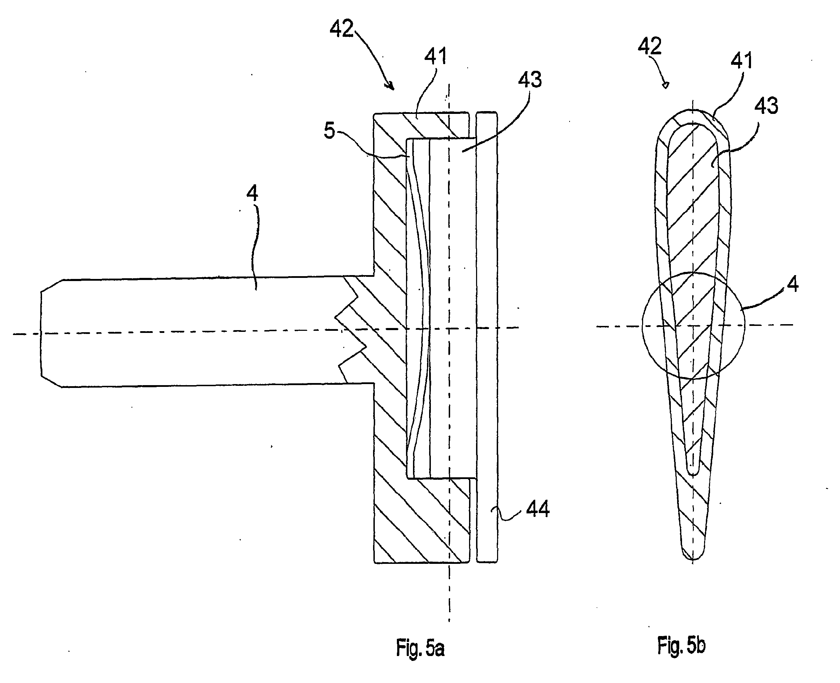

A further embodiment is shown in Fig. 5a and 5b. Herein the first part 1 of a vane 42 is shaped like a sleeve 41 and the second part 3 is shaped like a core 43. The cross sectional shapes of the sleeve 41 and the core 43 are substantially similar to that ones of the other embodiments, i.e. such that the core can be easily inserted into the sleeve 41. The core 43 is additionally provided with a cover plate 44 corresponding to the outer outlining of the sleeve 41. Thus when the core 43 is inserted into the sleeve 41 the cover plate 44 covers the end surface of the sleeve 41 such that these do not abut against the outer wall 13 and only the bottom surface of the cover plate 44 abuts against the outer wall 13.

Before inserting the core 43 into the sleeve 41 the leaf spring 5 is inserted into the sleeve 41 so as to bias the core 43 against the wall 13 after assembling the nozzle means to the turbine housing 21.

The remaining structure and respective effects are the same as already described for the other embodiments.

## Claims

1. A nozzle for a turbine or compressor of a turbocharger, comprising:
an inner wall (11) and an outer wall (13) spaced from the inner wall to define a passage therebetween; and
at least one vane (2) disposed in the passage and extending between the inner and outer walls, the vane (2) comprising a first part (1; 31; 41) and a second part (3; 33; 43), and a biasing member (5), **characterised in that** the biasing member (5) is arranged between the first part (1; 31; 41) and the second part (3; 33; 43) for biasing the first and second parts away from each other such that at least one of the first and second parts is urged towards one of said walls (11, 13).

2. A nozzle according to claim 1, wherein one of the first and second parts comprises a sleeve (3; 33; 41) and the other of the first and second parts comprises a core (1; 31; 43) slidably received in the sleeve.

3. A nozzle according to one of claims 1 and 2, wherein the first part (1; 31; 41) contacts one of said walls (11, 13) and the second part (3; 33; 43) contacts the other of said walls.

4. A nozzle according to one of claims 1-3, wherein the second part (3; 33; 43) is movable relative to the first part (1; 31; 41) and relative to said walls (11, 13) along a direction extending between said walls.

5. A nozzle according to one of claims 1 - 4, wherein the vane (2) is rotatable about an axis (7) that extends substantially along the direction extending between said walls (11, 13).

6. A nozzle according to one of claims 1-5, wherein the cross-sectional area of the passage is adjustable by rotating said vane (2).

7. A nozzle according to claim 6, further comprising a vane pin (4) affixed to the first part (1; 31; 41) and penetrating through the first wall (11), the vane (2) being rotatable about the axis (7) of the vane pin (4).

8. A nozzle according to claim 7, wherein the vane (2) is rotatably adjustable by an actuating mechanism comprising a nozzle ring (19) and a hinge mechanism (23) in engagement with the vane (2) via a unison ring (25).

9. A nozzle according to claim 8, wherein the unison ring (25) is adjustable by a cam (27).

10. A nozzle according to one of claims 2-9, wherein the sleeve (3; 33; 41) is made of sheet metal.

11. A nozzle according to one of claims 2-10, wherein the biasing member (5) is formed integral with the sleeve (3).

12. A nozzle according to one of claims 2-9, wherein the biasing member (5) is formed separate from and disposed within the sleeve (33; 41).

13. A nozzle according to one of claims 11 and 12, wherein the biasing member (5) is formed by spring sheet metal.

14. A nozzle according to one of claims 2-13, wherein the sleeve (3) is open at the side of the sleeve facing toward the inner wall (11) and at the side of the sleeve facing toward the outer wall (13).

15. A nozzle according to one of claims 2-13, wherein the sleeve (33; 41) is closed at one side thereof contacting one of said walls (11, 13).

16. A nozzle according to claim 1, wherein the biasing member (5) is attached to the first part (1) by at least one weld (15, 17).

17. A nozzle according to claim 2, wherein the core (43) includes a cover plate (44) on a side of the core that faces the outer wall (13), the cover plate (44) covering the end surface of the sleeve (41) such that said end surface does not abut against the outer wall (13).

18. A nozzle according to claim 17, wherein the cover plate (44) is shaped to correspond to the outer outlining of the sleeve (41).

19. A turbine (30) comprising a turbine wheel driven by a fluid passing through a nozzle according to one of claims 1-18.

20. A compressor comprising an impeller wheel urging a fluid through a nozzle according to one of claims 1-18.

21. A turbocharger comprising a turbine according to claim 19 and/or a compressor according to claim 20.

## Patentansprüche

1. Düse für eine Turbine oder einen Verdichter eines Turboladers, mit:
einer inneren Wand (11) und einer von der inneren Wand beabstandeten äußeren Wand (13), so dass zwischen ihnen ein Durchgang definiert ist; und
zumindest einem Flügel (2), der in dem Durchgang angeordnet ist und sich zwischen der inneren Wand und der äußeren Wand erstreckt, wobei der Flügel (2) einen ersten Teil (1; 31; 41) und einen zweiten Teil (3; 33; 43) aufweist, und einem Vorspannbauteil (5),
**dadurch gekennzeichnet, dass**
das Vorspannbauteil (5) zwischen dem ersten Teil (1; 31; 41) und dem zweiten Teil (3; 33; 43) zum Vorspannen des ersten Teils und des zweiten Teils angeordnet ist, um diese voneinander weg zu halten, so dass zumindest einer von dem ersten Teil und dem zweiten Teil zu einer der Wände (11, 13) hin gedrängt wird.

2. Düse nach Anspruch 1, wobei einer von dem ersten Teil und dem zweiten Teil eine Hülse (3; 33; 41) aufweist und der andere von dem ersten Teil und dem zweiten Teil einen Kern (1; 31; 43) aufweist, der in der Hülse gleitbar aufgenommen ist.

3. Düse nach Anspruch 1 oder 2, wobei der erste Teil (1; 31; 41) eine der Wände (11, 13) berührt und der zweite Teil (3; 33; 43) die andere der Wände berührt.

4. Düse nach einem der Ansprüche 1 bis 3, wobei der zweite Teil (3; 33; 43) relativ zu dem ersten Teil (1; 31; 41) und relativ zu den Wänden (11, 13) entlang einer Richtung bewegbar ist, die sich zwischen den Wänden erstreckt.

5. Düse nach einem der Ansprüche 1 bis 4, wobei der Flügel (2) um eine Achse (7) drehbar ist, die sich im Wesentlichen entlang der Richtung erstreckt, die sich zwischen den Wänden (11, 13) erstreckt.

6. Düse nach einem der Ansprüche 1 bis 5, wobei die Querschnittsfläche des Durchgangs durch Drehen des Flügels (2) einstellbar ist.

7. Düse nach Anspruch 6, die des Weiteren einen Flügelstift (4) aufweist, der an dem ersten Teil (1; 31; 41) befestigt ist und durch die erste Wand (11) hindurch dringt, wobei der Flügel (2) um die Achse (7) des Flügelstifts (4) drehbar ist.

8. Düse nach Anspruch 7, wobei der Flügel (2) durch einen Betätigungsmechanismus drehbar einstellbar ist, der einen Düsenring (19) und einen Gelenkmechanismus (23) aufweist, der über einen Übereinstimmungsring (25) mit dem Flügel (2) in Eingriff ist.

9. Düse nach Anspruch 8, wobei der Übereinstimmungsring (25) durch einen Nocken (27) einstellbar ist.

10. Düse nach einem der Ansprüche 2 bis 9, wobei die Hülse (3; 33; 41) aus Blech hergestellt ist.

11. Düse nach einem der Ansprüche 2 bis 10, wobei das Vorspannbauteil (5) einstückig mit der Hülse (3) ausgebildet ist.

12. Düse nach einem der Ansprüche 2 bis 9, wobei das Vorspannbauteil (5) getrennt von der Hülse (33; 41) ausgebildet ist und innerhalb dieser angeordnet ist.

13. Düse nach Anspruch 11 oder 12, wobei das Vorspannbauteil (5) durch Federblech ausgebildet ist.

14. Düse nach einem der Ansprüche 2 bis 13, wobei die Hülse (3) an der Seite der Hülse, die zu der inneren Wand (11) hin zugewandt ist, und an der Seite der Hülse offen ist, die zu der äußeren Wand (13) hin zugewandt ist.

15. Düse nach einem der Ansprüche 2 bis 13, wobei die Hülse (33; 41) an einer ihrer Seiten geschlossen ist, die eine der Wände (11, 13) berührt.

16. Düse nach Anspruch 1, wobei das Vorspannbauteil (5) durch zumindest eine Schweißnaht (15, 17) an dem ersten Teil (1) angebracht ist.

17. Düse nach Anspruch 2, wobei der Kern (43) eine Abdeckungsplatte (44) an einer Seite des Kerns hat, die zu der äußeren Wand (13) zugewandt ist, wobei die Abdeckungsplatte (44) die Endfläche der Hülse (41) derart abdeckt, dass die Endfläche nicht an der äußeren Wand (13) anliegt.

18. Düse nach Anspruch 17, wobei die Abdeckungsplatte (44) geformt ist, um zu der Außenkontur der Hülse (41) zu korrespondieren.

19. Turbine (30) mit einem Turbinenrad, das durch ein durch eine Düse nach einem der Ansprüche 1 bis 18 strömendes Fluid angetrieben wird.

20. Verdichter mit einem Laufrad, das ein Fluid durch eine Düse nach einem der Ansprüche 1 bis 18 drängt.

21. Turbolader mit einer Turbine nach Anspruch 19 und/oder einem Verdichter nach Anspruch 20.

## Revendications

1. Ajutage pour une turbine ou compresseur d'un turbocompresseur, comprenant :
une paroi intérieure (11) et une paroi extérieure (13) séparée de la paroi intérieure pour délimiter un passage entre elles ; et
au moins une ailette (2) disposée dans le passage et s'étendant entre les parois intérieure et extérieure, l'ailette (2) comprenant une première partie (1 ; 31 ; 41), une seconde partie (3 ; 33 ; 43) et un élément de rappel (5), **caractérisé en ce que** ledit élément de rappel (5) est disposé entre la première partie (1 ; 31 ; 41) et la seconde partie (3 ; 33 ; 43) pour éloigner l'une de l'autre lesdites première et seconde parties de telle sorte qu'au moins une des première et seconde parties soit pressée vers une desdites parois (11, 13).

2. Ajutage selon la revendication 1, dans lequel l'une des première et seconde parties comprend un manchon (3 ; 33 ; 41) et l'autre des première et seconde parties comprend un noyau (1 ; 31 ; 43) logé dans le manchon de façon à pouvoir y coulisser.

3. Ajutage selon l'une des revendications 1 et 2, dans lequel la première partie (1 ; 31 ; 41) est en contact avec l'une desdites parois (11, 13) et la seconde partie (3 ; 33 ; 43) est en contact avec l'autre desdites parois.

4. Ajutage selon l'une quelconque des revendications 1 à 3, dans lequel la seconde partie (3 ; 33 ; 43) est mobile par rapport à la première partie (1 ; 31 ; 41) et par rapport auxdites parois (11, 13) suivant une direction s'étendant entre lesdites parois.

5. Ajutage selon l'une quelconque des revendications 1 à 4, dans lequel l'ailette (2) peut tourner autour d'un axe (7) qui s'étend sensiblement suivant une direction s'étendant entre lesdites parois (11, 13).

6. Ajutage selon l'une quelconque des revendications 1 à 5, dans lequel la section du passage peut se régler en faisant tourner ladite ailette (2).

7. Ajutage selon la revendication 6, comprenant en outre une clavette (4) d'ailette fixée sur la première partie (1 ; 31 ; 41) et passant à travers la première paroi (11), l'ailette (2) pouvant tourner autour de l'axe (7) de la clavette (4) d'ailette.

8. Ajutage selon la revendication 7, dans lequel l'ailette (2) peut se régler par rotation au moyen d'un mécanisme d'actionnement comprenant un distributeur annulaire (19) et un mécanisme de charnière (23) qui s'enclenche avec l'ailette (2) par l'intermédiaire d'un disque d'entraînement (25).

9. Ajutage selon la revendication 8, dans lequel le disque d'entraînement (25) est réglable par une came (27).

10. Ajutage selon l'une quelconque des revendications 2 à 9, dans lequel le manchon (3 ; 33 ; 41) est fait en tôle.

11. Ajutage selon l'une quelconque des revendications 2 à 10, dans lequel l'élément de rappel (5) est façonné d'une seule pièce avec le manchon (3).

12. Ajutage selon l'une quelconque des revendications 2 à 9, dans lequel l'élément de rappel (5) est façonné séparément et disposé à l'intérieur du manchon (33 ; 41).

13. Ajutage selon l'une des revendications 11 et 12, dans lequel l'élément de rappel (5) est façonné en tôle bleue.

14. Ajutage selon l'une quelconque des revendications 2 à 13, dans lequel le manchon (3) est ouvert du côté du manchon tourné vers la paroi intérieure (11) et du côté du manchon tourné vers la paroi extérieure (13).

15. Ajutage selon l'une quelconque des revendications 2 à 13, dans lequel le manchon (33 ; 41) est fermé sur le côté de celui-ci en contact avec l'une desdites parois (11, 13).

16. Ajutage selon la revendication 1, dans lequel l'élément de rappel (5) est fixé à la première partie (1) par au moins une soudure (15, 17).

17. Ajutage selon la revendication 2, dans lequel le noyau (43) comprend un couvercle (44) qui fait face à la paroi extérieure (13), ledit couvercle (44) recouvrant la surface terminale du manchon (41) de telle sorte que ladite surface terminale ne vienne pas en butée contre la paroi extérieure (13).

18. Ajutage selon la revendication 17, dans lequel le couvercle (44) a une forme qui correspond au contour extérieur du manchon (41).

19. Turbine (30) comprenant une roue de turbine mue par un fluide passant à travers un ajutage selon l'une quelconque des revendications 1 à 18.

20. Compresseur comprenant un rouet centrifuge pressant un fluide à travers un ajutage selon l'une quelconque des revendications 1 à 18.

21. Turbocompresseur comprenant une turbine selon la revendication 19 et/ou un compresseur selon la revendication 20.
